# EUROPÄISCHE PATENTSCHRIFT

(11) **EP 0 677 557 B1**
(45) Veröffentlichungstag und Bekanntmachung des Hinweises auf die Patenterteilung: **13.01.1999**
(21) Anmeldenummer: 95104946.9
(22) Anmeldetag: 03.04.1995
(51) Int. Cl.: C09B 69/10, C09D 11/00

(54) **Farbstoffe und ihre Verwendung in Tinten für ink-jet-Druckverfahren**
Dyes and the use thereof in inks for ink jet printing process
Colorants et leur utilisation dans des encres pour procédé d'impression par jet d'encre

(30) Priorität: 15.04.1994 DE 4413007
(43) Veröffentlichungstag der Anmeldung: 18.10.1995
(73) Patentinhaber: BAYER AG, 51368 Leverkusen (DE)
(72) Erfinder: Mennicke, Winfried, Dr., D-51375 Leverkusen (DE); Hassenrück, Karin, Dr., D-40468 Düsseldorf (DE)

(56) Entgegenhaltungen:
- EP-A- 0 223 501
- EP-A- 0 317 859
- EP-A- 0 423 561
- DE-A- 2 018 855
- GB-A- 2 006 279

## Beschreibung

Die vorliegende Erfindung betrifft wasserlösliche, kovalent an acylierte Polyamine gebundene Farbstoffe und deren Verwendung zum Färben und Bedrucken von Cellulose- und Amidgruppen-haltigen Materialien sowie in Aufzeichnungsflüssigkeiten für Tintenstrahlaufzeichnungssysteme.

An Polyamine kovalent gebundene Farbstoffe sind bekannt und beispielsweise in der Patentliteratur DE-A-24 25 283, DE-A-27 47 358, JA-A-50 10 72 77, JA-A 59 08 775, DE-A-20 18 855, US-A-39 37 851, US-A-50 98 475 oder JA-A-59 27 973 beschrieben. Derartige polyamingruppenhaltige Farbstoffe weisen aber in vielen Fällen insbesondere unterhalb von pH 9 eine unzureichende Wasserlöslichkeit auf. Verwendet man diese Farbstoffe beispielsweise in wäßrigen Aufzeichnungsflüssigkeiten für Tintenstrahlaufzeichnungssysteme, so kann es zu Ausfällungen und Blockierung der empfindlichen Druckerdüsen kommen. Es wurde nun gefunden, daß durch Acylierung von einer oder mehreren Amingruppen des Polyamins die Wasserlöslichkeit dieser Farbstoffe und damit die Stabilität von daraus hergestellten Aufzeichnungsflüssigkeiten deutlich verbessert werden kann.

Aus EP-A-0 317 859 sind ebenfalls polymere Farbstoffe bekannt, die kovalent gebundene Polyethylenimingruppen enthalten und zum Färben oder Bedrucken von Fasermaterialien oder zur Herstellung von Tinten für das Ink-Jet Verfahren eingesetzt werden können.

EP-A-0 223 501 beschreibt Tintenzusammensetzungen enthaltend polymere Farstoffe, die kovalent gebundene Polyethylenimingruppen aufweisen.

Es wurden nun neue Farbstoffe gefunden, erhältlich durch Reaktion von
A) Polyaminen, die mindestens 2 primäre oder sekundäre Aminogruppen enthalten, mit
B) reaktiven Verbindungen, die mindestens zwei gegenüber primären und sekundären Aminen reaktive Gruppen enthalten, in einer Menge von 5 bis 95 Mol-%, bezogen auf die primären und sekundären Aminogruppen des Polyamins und
C) Farbstoffen, die mindestens eine acylierbare primäre oder sekundäre Aminogruppe enthalten, in einer Menge von 10 bis 200 Mol-%, bezogen auf die reaktive Verbindung und
D) Carbonyl- oder Sulfonylgruppen-haltigen Acylierungsmitteln in einer Menge von 5 bis 95 Mol-%, bezogen auf die primären und sekundären Aminogruppen des Polyamins.

Bevorzugt sind dabei jene Farbstoffe, wobei der Farbstoff C) jeweils an die reaktive Verbindung B) gebunden ist.

Besonders bevorzugte Farbstoffe sind solche, bei denen darüberhinaus das Acylierungsmittel D) an das Polyamin A) gebunden ist.

Bevorzugt sind Farbstoffe, die dadurch erhältlich sind, daß als Polyamine A) solche der Formel (I) 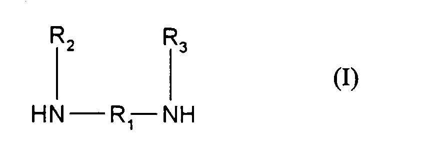 verwendet werden, worin
- R₁ =: lineares oder verzweigtes C₂-C₂₀-Alkylen, gegebenenfalls durch C₁-C₄-Alkyl substituiertes C₆-C₁₀-Arylen, 2 oder mehrere, gegebenenfalls durch C₁-C₄-Alkyl substituierte C₆-C₁₀-Arylen-Einheiten, die gegebenenfalls durch C₁-C₄-Alkylen unterbrochen sind, n lineare oder verzweigte durch (n-1) Aminogruppen unterbrochene C₂-C₂₀-aliphatische Einheiten, mit n = 2 bis 25 000, wobei die als Bedeutungen von R₁ aufgeführten Reste gegebenenfalls aminogruppenhaltig sind,
- R₂ und R₃ =: unabhängig voneinander Wasserstoff, C₁-C₁₀-Alkyl, C₆-C₁₀-Aryl oder zusammen eine C₂-C₁₀-Alkylen- oder C₆-C₁₀-Aryleneinheit bilden.

Besonders bevorzugt sind Farbstoffe, die dadurch erhältlich sind, daß mindestens eines der nachstehenden Polyamine verwendet wird:
a) Diamine der Formel (II)

   H₂N-R-NH₂ (II),

   worin
   - R: für C₂-C₉-Alkylen oder einen zweiwertigen Rest der Formel 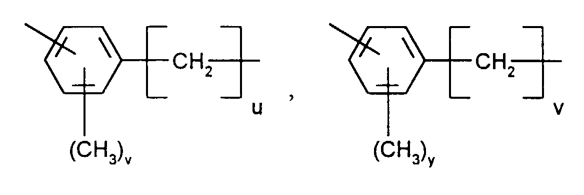 oder 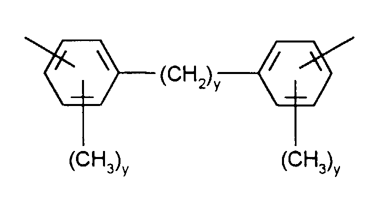 steht, worin
   - u: für 1 oder 2,
   - v: für 0 oder 1 und
   - y: für 1, 2 oder 3 stehen
b) Piperazine der Formel 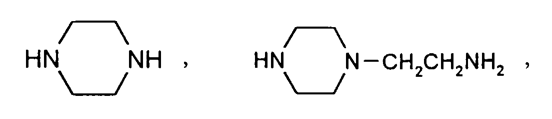 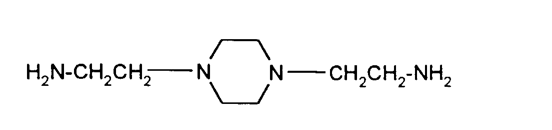
c) Polyamine der Formel (III) 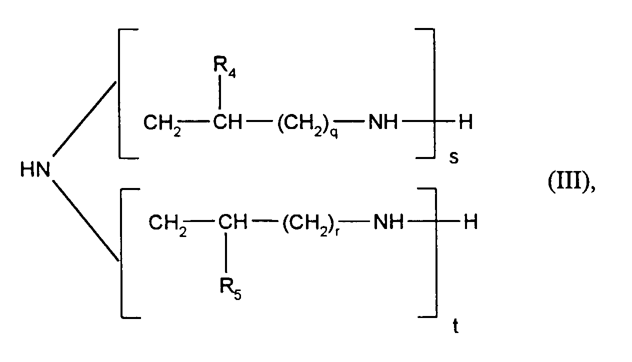 worin
   - R₄, R₅: unabhängig voneinander für Wasserstoff, Methyl oder Ethyl,
   - q, r: unabhängig voneinander für 0, 1, 2, 3 oder 4 und
   - s, t: unabhängig voneinander für 1, 2, 3, 4, 5 oder 6 stehen,
d) Polyamine, erhältlich durch Polymerisation von C₂-C₁₀-Alkyleniminen,
e) Polyamine, erhältlich durch Polymerisation von ungesättigten aliphatischen C₃-C₁₀-Aminen, in denen die Aminogruppe allylständig ist oder aromatischen C₆-C₁₀-Aminen, welche ungesättigte aliphatische Reste tragen, deren Doppelbindung in Konjugation mit dem aromatischen System steht,
f) Polyamine, erhältlich durch Kondensation von Polyaminen der Formel (III) mit aliphatischen C₂-C₁₀-Dihalogeniden.

Für die Polyamine d) können beispielsweise solche genannt werden, wie sie bei der Polymerisation von Ethylenimin entstehen, beispielsweise Polyethylenamine mit einem Polymerisationsgrad von 10 bis 25 000.

Für die Polyamine f) kommt vorzugsweise die Kondensation von 1,2-Dichlor- oder 1,2-Dibromethan mit Polyaminen der Formel (III) in Frage.

Als Polyamine e) sind vorzugsweise solche zu nennen, die durch Polymerisation von Verbindungen wie Allylamin, Diallylamin, Methyl-, Ethyl-, Propylaminoethylstyrol oder Aminostyrol erhältlich sind.

Die reaktive Verbindung B) leitet sich von einer aliphatischen, araliphatischen, aromatischen oder heteroaromatischen Verbindung ab und besitzt mindestens zwei reaktive Gruppen, die mit primären und sekundären nukleophilen Aminogruppen oder nukleophilen aromatischen C-Atomen kovalente Bindungen auszubilden vermögen.

Besonders bevorzugte Farbstoffe sind dadurch erhältlich, daß man als reaktive Verbindungen B) solche verwendet, die unabhängig voneinander mindestens einen der nachstehenden Reste besitzen:
-SO₂-A, -CO-A, -SO₂-CH=CH₂,
-SO₂-CH₂CH₂-A, -CO-CH₂CH₂-A, -CONH-CH₂-A,
-SO₂NH-CH₂CH₂-A, -NHCO-CH₂CH₂-A, 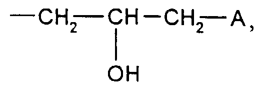 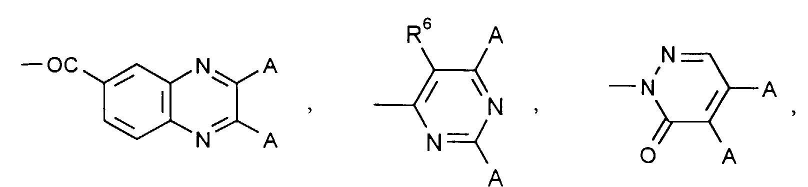 mit R⁶ = H, Cl, CH₃, CN 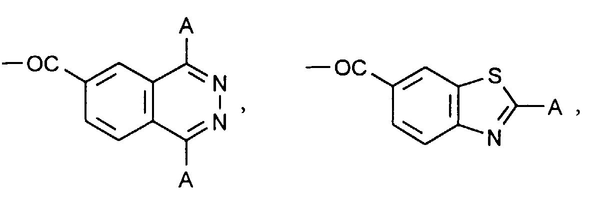 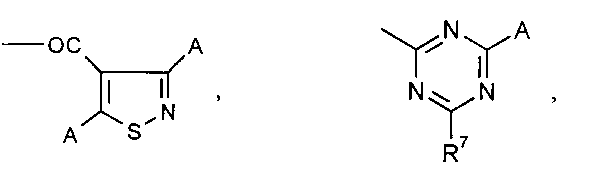 mit R⁷ = NH₂, 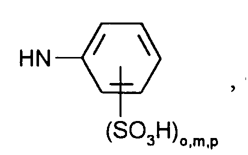 OCH₃ oder OCH₂CH₂OCH₃ und bevorzugt einen Rest der Formel 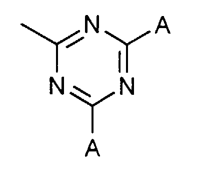 besitzen, worin
- A: eine Abgangsgruppe darstellt und beispielsweise Cl, F, OSO₃H, N(CH₃)₃, SO₂CH₃, OPO₃H oder SO₂C₂H₅ bedeutet.

Die in der obigen Aufstellung genannten gegenüber primären und sekundären Aminen reaktiven mono- oder polyfunktionellen Reste werden in der Farbstoffchemie als Reaktivgruppe oder "Reaktivhaken" bezeichnet.

Unter reaktiven Verbindungen B) werden im Rahmen dieser Anmeldung insbesondere heteroaromatische Reaktivgruppen, vorzugsweise Halogentriazine wie Cyanurchlorid, -fluorid oder -bromid sowie Halogenpyrimidine etc. verstanden.

Die reaktiven Verbindungen können auch Reaktivfarbstoffe an sich oder deren mit reaktiven Resten versehenen Vorstufen bedeuten.

Im einzelnen können die reaktiven Verbindungen C) auch die nachfolgenden Reste enthalten:
2,4-Difluortriazinyl-6-, 2,4-Dichlortriazinyl-6-, Mono-halogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, C₁-C₄-Alkoxy, Vinylsulfonyl-C₂-C₄-alkoxy, substituierte Alkylsulfonyl-C₂-C₄-alkoxy, Carboxy, Sulfo oder Sulfato und für Phenyl und Naphthyl Sulfo, C₁-C₄-Alkyl, C₁-C₄-Alkoxy, Carboxy, Halogen, Acylamino, Vinylsulfonyl, substituiertes Alkylsulfonyl, Hydroxy, Amino sind.

Im einzelnen seien folgende Reste genannt:
2-Amino-4-fluor-triazinyl-6, 2-Methylamino-4-fluor-triazinyl-6, 2-Ethylamino-4-fluor-triazinyl-6, 2-Isopropylamino-4-fluor-triazinyl-6, 2-Dimethylamino-4-fluor-triazinyl-6, 2-Diethylamino-4-fluor-triazinyl-6, 2-β-Methoxy-ethylamino4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluortriazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl- bzw. N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m- oder p-Methyl- oder -Methoxyphenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluor-triazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäuren oder Hydrogensulfit erhältlichen Reste.

Mono-, Di- oder Trihalogenpyrimidinylreste, wie 2,4-Dichlorpyrimidinyl-6, 2,4,5-Trichlorpyrimidinyl-6, 2,4-Dichlor-5-nitro- oder -5-methyl- oder -5-thiomethyloder -5-carboxymethyl- oder -5-carboxy- oder -5-cyano- oder -5-vinyl- oder 5-sulfo- oder -5-mono-, -di- oder -trichlormethyl- oder -5-carbalkoxypyrimidinyl-6, 2,6-Dichlorpyrimidin-4-carbonyl, 2,4-Dichlorpyrimidin-5-carbonyl, 2-Chlor-4-methyl-pyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2-Chlor-chinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl oder -6-carbonyl, 2,4-Dichlorchinoxalin-7- oder -6-sulfonyl oder -carbonyl, 2- oder 3- oder 4-(4',5'-Dichlorpyridazon-6'-yl-1')-phenylsulfonyl- oder -carbonyl, β-(4',5'-Dichlorpyridazon-6'-yl-1')-ethyl-carbonyl, N-Methyl-N-(2,3-dichlorchinoxalin-6-sulfonyl)-aminoacetyl, N-Methyl-N-(2,3-dichlorchinoxalin-6-carbonyl)-aminoacetyl, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,6-Difluor-5-thiomethyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor -5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-2-chlormethyl-6-fluor-4-pyrimidinyl, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-fluor-2-methyl-4-pyrimidinyl-, 5,6-Difluor-2-trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethyl sulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methyl-pyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-4-pyrimidinyl-, 2-Phenylsulfonyl-5-chlor-6-methyl-pyrimidinyl-4-, 2,6-Bis-methylsulfonyl-pyrimidinyl-4-, 2-Ethylsulfonyl-5-chlor-6-methyl-pyrimidinyl-4-, 2-Methylsulfonyl-6-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carboxymethoxy-pyrimidinyl-4, 2-Methylsulfonyl-5-carboxy-pyrimidinyl-4, 2-Methylsulfonyl-5-cyan-6-methoxy-pyrimidinyl-4, 2-Methylsulfonyl-5-chlor-pyrimidinyl-4, 2-β-Sulfoethyl-sulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4, 2-Methylsulfonyl-6-chlor-pyrimidin-4- und -5-carbonyl-, 2,6-Bis-(methylsulfonyl)-pyrimidin-4- oder -5-carbonyl-, 2-Ethylsulfonyl-6-chlor-pyrimidin-5-carbonyl-, 4-Bis-(methylsulfonyl)-pyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonyl-benzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl, N-Oxid des 4-Chlor- oder 4-Nitrochinolin-5-carbonyls.

Ebenfalls bevorzugte Farbstoffe sind dadurch erhältlich, daß die eingesetzten Farbstoffe C) Phthalocyanin-, Nitroaryl-, Triphenylmethan-, Oxazin-, Triphendioxazin-, Phenazin-, Stilben-, Thiazin- oder Xanthenfarbstoffe sind, vornehmlich aber Anthrachinon-, Monoazo-, Disazo- und Polyazofarbstoffe sowie weiterhin Metallkomplexfarbstoffe, wie 1:1-Nickel-, 1:1-Kupfer- oder 1:1-Chromkomplexe, 1:2-Kobaltkomplexe oder symmetrische oder unsymmetrische 1:2-Chromkomplexe mit einer metallkomplexbildenden o,o'-Dihydroxy-, o-Hydroxy-o'-amino- oder o-Carboxy-o'-hydroxy-Azo- oder -Azomethinstruktur bedeuten.

Vorzugsweise leiten sich die Farbstoffe C) von den wasserlöslichen Farbstoffen der oben genannten Chromophorsysteme ab, die als wasserlöslich machende Gruppe unabhängig voneinander ein oder mehrere Sulfonamid-, am Stickstoff ein- oder zweimal alkylsubstituierte Sulfonamid-, Alkylsulfonyl-, Carboxyl-, Carboxylat- oder Sulfonat-Gruppen tragen. Bevorzugte Alkylgruppen sind dabei Methyl, Ethyl oder Hydroxyethyl. Als geeignetes Gegenion der anionischen Gruppen kommen Alkaliionen, insbesondere Lithium-, Natrium- oder Kaliumionen, Ammoniumionen oder die Kationen von organischen Aminen, insbesondere mono-, di-, tri- oder tetra-niedrigalkylsubstituierte Ammoniumionen in Betracht.

Unter dem Begriff wasserlösliche Farbstoffe werden hier Farbstoffe verstanden, die wasserlöslichmachende Gruppen, wie oben genannt, tragen bzw. Farbstoffe verstanden, die im allgemeinen eine Löslichkeit von größer als 10 g Farbstoff / 1 l Wasser bei einer Temperatur von 25°C aufweisen.

In einer besonderen Ausführungsform werden die reaktive Verbindung B) und der Farbstoff C) gemeinsam durch einen Reaktivfarbstoff mit mindestens einer gegenüber primären und sekundären Aminen reaktiven Gruppe repräsentiert.

Weiterhin bevorzugte Farbstoffe sind dadurch erhältlich, daß als Carbonyl- oder Sulfonylgruppen-haltiges Acylierungsmittel D) Carbonsäurehalogenide, -Ester oder -Anhydride, Halogenkohlensäureester, Isocyanate oder Sulfonsäurehalogenide, -Ester oder -Anhydride oder Isothiocyanate verwendet werden.

Beispielsweise können hier genannt werden:
Propionsäurechlorid, -bromid, -ethylester, -anhydrid, Chlorkohlensäureethylester oder Ethylisocyanat.

Als bevorzugte Acylierungsmittel D) kommen auch Carbonsäureanhydride in Bei tracht, vorzugsweise Maleinsäure-, Bernsteinsäure-, Glutarsäure-, Essigsäure- oder Phthalsäureanhydrid.

Die Erfindung betrifft weiterhin ein Verfahren zur Herstellung der erfindungsgemäßen Farbstoffe.

Ausgehend von Farbstoffen C), den reaktiven Verbindungen B), den Polyaminen A) sowie den Acylierungsmitteln D) sind zur Herstellung der erfindungsgemäßen Farbstoffe im wesentlichen drei Reaktionsschritte erforderlich, deren Reihenfolge beliebig geändert werden kann.

So kann beispielsweise die di- oder gegebenenfalls trifunktionelle reaktive Verbindung unter milden Bedingungen nur an einer Funktion mit einer Aminogruppe des Polyamins gebunden werden und dann unter Bedingungen, die vorzugsweise unter höheren Temperaturen ablaufen als bei der ersten Acylierungsstufe notwendig waren, mit dem nukleophilen Aminogruppen-haltigen Farbstoff umgesetzt und das resultierende Reaktionsprodukt anschließend acyliert werden.

Bei einer bevorzugten Verfahrensvariante werden jedoch die Reaktivfarbstoffe (d.h. Farbstoffe C), die bereits mit der reaktiven Verbindung B) zu Reaktivfarbstoffen umgesetzt wurden) mit zunächst den Polyaminen und anschließend mit dem genannten Acylierungsmittel umgesetzt. Ebenfalls möglich und vorteilhaft ist die Umsetzung von Polyaminen mit dem Acylierungsmittel in einem ersten Reaktionsschritt und erst darauffolgendend die Umsetzung des resultierenden Produktes mit einem Reaktivfarbstoff.

Die einzusetzenden Reaktivfarbstoffe leiten sich von den oben beschriebenen Farbstoffen C) ab und besitzen als Reaktivgruppe jene Reste, die bereits für die reaktive Verbindung B) genannt wurden.

Für den Fall, daß Aminogruppen-haltige Farbstoffe und reaktive Verbindungen nicht in Form des bereits fertiggestellten Reaktivfarbstoffes verwendet werden, kann die Kondensation zum Reaktivfarbstoff vorzugsweise im wäßrigen Medium bei Temperaturen von 0 bis 60°C erfolgen, wobei gegebenenfalls die bei der Reaktion freiwerdenden Säuren durch alkalisch wirkende Mittel abgefangen werden.

Geeignete alkalisch wirkende Mittel sind dafür beispielsweise die Hydroxyde, Carbonate und Hydrogencarbonate von Alkalimetallen, wie Lithium-, Natrium- oder Kaliumhydroxyd, -carbonat oder -hydrogencarbonat, Ammoniak oder die 1-, 2-, 3- oder 4-mal niedrigalkylsubstituierten Ammoniumhydroxyde, wie Mono-, Di- oder Triethylammoniumhydroxyd, Mono-, Di- oder Tri(2-hydroxyethyl)ammoniumhydroxyd oder Tetramethylammoniumhydroxyd oder Pyridinbasen, wie Pyridin, Picolin oder Cholin.

Bei den obengenannten Reaktivfarbstoffen handelt es sich vorzugsweise um solche, die einen oder mehrere faserreaktive Reste enthalten. Derartige faserreaktive Farbstoffe sind in der Literatur zahlreich beschrieben und stehen in großer Zahl als Handelsprodukte zur Verfügung. Eine Aufstellung von faserreaktiven Handelsprodukten befindet sich beispielsweise in "Colour Index", 3. Ed (4. Revision, 1992), Vol. 9, S. 5151-5168.

Für die Herstellung der erfindungsgemäßen Farbstoffe sind solche Reaktivfarbstoffe bevorzugt, die nur eine faserreaktive Gruppe enthalten und durch Additions- oder Substitutionsreaktionen mit primären und sekundären Amingruppen in bevorzugt wäßrigem Medium unter neutralen bis schwach alkalischen Bedingungen bei Temperaturen von 20 bis 80°C eine chemische Bindung eingehen. Die in dem Polyamin enthaltenen primären und/oder sekundären Amingruppen brauchen nicht stöchiometrisch durch Reaktivfarbstoffe und Acylierungsmittel abreagiert zu sein. So läßt sich beispielsweise das molare Verhältnis des Reaktivfarbstoffes bzw. der reaktiven Verbindung zu dem Acylierungsmittel in den Grenzen von 1 : 0,3 bis 1 : 3,0 variieren. Das molare Verhältnis von dem einzusetzenden Reaktivfarbstoff bzw. der reaktiven Verbindung zu den im Polyamin enthaltenen primären und sekundären Aminogruppen bewegt sich vorzugsweise in den Grenzen 1 : 1,05 bis 1 : 20, insbesondere 1 : 2 bis 1 : 10, wobei dieses Verhältnis vorzugsweise als Verhältnis der reaktiven Gruppen des Reaktivfarbstoffes zu den im Polyamin enthaltenen primären und sekundären Aminogruppen zu verstehen ist. Das molare Verhältnis von Acylierungsmittel zu den im Polyamin enthaltenen primären und sekundären Amingruppen beträgt ebenfalls vorzugsweise 1 : 1,05 bis 1 : 20, insbesondere 1 : 2 bis 1 : 10.

Nach beendeter Synthese der erfindungsgemäßen Farbstoffe erhält man in der Regel eine Lösung, aus der die Farbstoffe durch Einengen oder Aussalzen isoliert und auf dem üblichen Weg zu Pulver- oder Flüssigformierungen aufgearbeitet werden können.

Die Erfindung betrifft weiterhin Farbstoffe, erhältlich durch Reaktion von
A1) Polyaminen, die ihrerseits erhältlich sind durch Polymerisation von ungesättigten aliphatischen C₃-C₁₀-Aminen, in denen die Aminogruppe allylständig ist, insbesondere Allylamin oder Diallylamin, oder
   aromatischen Aminen, die ungesättigte aliphatische Reste in Konjugation mit dem aromatischen System tragen, insbesondere Methyl-, Ethyl- oder Propylaminoethylstyrol oder Aminostyrol,
   mit
B) reaktiven Verbindungen, die mindestens zwei gegenüber primären und sekundären Aminen reaktive Gruppen enthalten, in einer Menge von 5 bis 95 Mol-%, bezogen auf die primären und sekundären Aminogruppen des Polyamins und
C) Farbstoffen, die mindestens eine acylierbare primäre oder sekundäre Aminogruppe enthalten, in einer Menge von 10 bis 200 Mol-%, bezogen auf die reaktive Verbindung,
wobei der Farbstoff C) jeweils an die reaktive Verbindung B) gebunden ist.

Für die reaktive Verbindung B) und den Farbstoff C) gilt das dazu oben gesagte.

Auch diese Farbstoffe werden bevorzugt wie oben beschrieben durch Verwendung von Reaktivfarbstoffen erhalten, anstatt durch aufeinanderfolgende Verwendung der Einzelkomponenten B) und C).

Auch für diese (nicht Polyamin-acylierten) Farbstoffe gilt, daß sie ebenfalls erfindungsgemäß und vorteilhaft sind. Für die nachfolgende Verwendung des Begriffs "erfindungsgemäße" Farbstoffe werden somit beide Farbstofftypen verstanden.

Die erfindungsgemäßen Farbstoffe färben sowohl in Form von festen als auch von flüssigen Präparationen Cellulose- und Amidgruppen-haltige Materialien, insbesondere Papier, Baumwolle, Viskose und Leder, und ergeben Färbungen mit guter Naß- und Lichtechtheit. Besonders gut eignen sie sich für die Herstellung von Aufzeichnungsflüssigkeiten für Tintenstrahl-Druckverfahren, z.B. in Verbindung mit bubble-jet- oder Piezo-Drucksystemen.

Bei der Herstellung von Aufzeichnungsflüssigkeiten ist keine Zwischenisolierung der erfindungsgemäßen Farbstoffe notwendig. Die bei ihrer Synthese anfallende Lösung oder gegebenenfalls anfallende Suspensionen können direkt unter Anwendung von Membrantrennverfahren entsalzt und dabei aufkonzentriert und von niedermolekularen Nebenprodukten befreit und anschließend gegebenenfalls durch Zusatz wasserlöslicher organischer Lösungsmittel, hydrotroper Hilfsmittel und weiterer üblicher Zusätze in die für Tintenstrahl-Druckverfahren geeignete Formierung überführt werden.

Ein geeignetes Membrantrennverfahren ist die Druckpermeation an semipermeablen Membranen. Sie kann als Reversosmose, Ultra- oder Nanofiltration oder durch Kombination dieser Methoden erfolgen. Bevorzugte Methode ist die Ultrafiltration unter Verwendung von Membranen, die für Salze und Verbindungen mit einem Molekulargewicht von unter ca. 20 000 Dalton durchlässig sind.

Geeignete organische Lösungsmittel und hydrotrop wirkende Mittel sind ein- und mehrwertige Alkohole und deren Ether und Ester, Nitrile, Carbonsäureamide, cyclische Amide, Harnstoffe und Ester, Sulfone und Sulfoxide. Besonders geeignet sind beispielsweise Methanol, Ethanol, Propanol, Ethylenglykol und dessen Monomethyl-, -ethyl- und -propylether, 1,2-Propylenglykol, 1-Methoxy- und 1-Ethoxy-2-propanol, 2-Methoxy- und 2-Ethoxy-1-propanol, Diethylenglykol, Diethylenglykolmonomethyl- und -ethylether, Dipropylenglykol, Triethylenglykol, 1,5-Pentandiol, Glycerin, Essigsäure-2-hydroxyethylester, ester, Essigsäure-2-(2-hydroxyethoxy)-ethylester, 2-Hydroxypropionitril, Formamid, Dimethylformamid, Pyrrolidon, N-Methylpyrrolidon, 6-Caprolactam, N-Methyl-6-caprolactam, Harnstoff, Tetramethylharnstoff, 1,3-Dimethyl-2-imidazolidinon, N,N'-Dimethylpropylenharnstoff, Butyrolacton, Dimethylsulfoxid, Dimethylsulfon, Sulfolan und Polyethylenglykole mit einem Molekulargewicht bis 500 Dalton.

Als weitere in Drucktinten übliche Zusätze kommen solche ionische und nichtionische Stoffe in Frage, mit denen die Viskosität und/oder Oberflächenspannung in die für die Anwendung erforderlichen Bereiche eingestellt werden kann.

Die erfindungsgemäßen Drucktinten setzen sich zusammen aus:
- 0,5 bis 20 Gew.-% eines oder mehrerer erfindungsgemäßer Farbstoffe,
- 50 bis 99,5 Gew.-% Wasser,
- 0 bis 30 Gew.-% eines oder mehrerer organischer Lösungsmittel und/oder hydrotrop wirkender Mittel,
- 0 bis 30 Gew.-% Viskosität und/oder Oberflächenspannung beeinflussende Zusätze,
wobei sich die Summe der genannten Inhaltsstoffe auf 100 Gew.-% ergänzt.

Die erfindungsgemäßen Aufzeichnungsflüssigkeiten sind bei pH-Werten von unterhalb 9,0 noch stabil und zeichnen sich dadurch aus, daß sich auch bei längerem Aufbewahren keine Ausfällungen ablagern, und sich bei geringen Verdunstungen die feinen Düsen von Aufzeichnungsköpfen nicht verstopfen. Sie eignen sich zur Aufzeichnung auf verschiedenen Aufzeichnungsmedien ohne Beschränkungen hinsichtlich der Art der Aufzeichnungsmedien. Sie fixieren rasch, bilden scharfe Ränder ohne Ausfransungen und geben schließlich Bilder von hoher Dichte und Auflösung mit ausgezeichneter Wasserfestigkeit, Lichtechtheit und Abriebbeständigkeit.

Die in den nachfolgenden Beispielen angegebenen Formeln stellen lediglich eine mögliche strukturelle Form des jeweiligen erfindungsgemäßen Farbstoffes dar.

Die Erfindung betrifft weiterhin Substrate, insbesondere Papier, gefärbt mit wenigstens einem der erfindungsgemäßen Farbstoffe.

### Beispiele

### Beispiel 1

205 g einer Paste des Farbstoffes der Formel 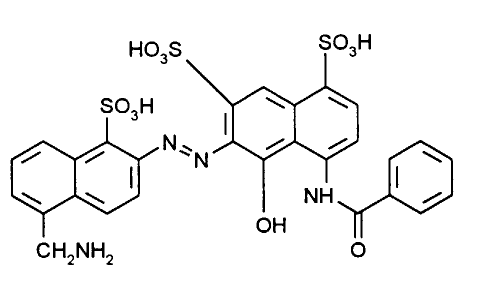 mit einem Farbstoffgehalt von 33,5 % werden in 500 ml Wasser suspendiert und durch Zugabe von 10%iger NaOH bei pH 11,8 gelöst. Diese Lösung wird so in eine Vorlage von 20,3 g Cyanurchlorid in 180 ml Wasser gepumpt, daß sich ein pH von 6 einstellt. Mit 10%iger NaOH wird eine weitere Stunde ein pH von 6 gehalten. Nach Erhitzen der Mischung auf 60°C werden 23,1 g Pentaethylenhexamin in 260 ml Wasser so zugepumpt, daß sich ein pH von 7,5 einstellt. Die Reaktionszeit beträgt zwei Stunden. Es wird auf 85°C aufgeheizt und weitere 92,7 g Pentaethylenhexamin zugegeben. Bei dieser Temperatur wird der pH 1 Stunde bei 9 mit 10%iger NaOH gehalten. Nach dem Abkühlen wird mit verdünnter HCl auf pH 7 gestellt, abgesaugt, mit Wasser gewaschen und getrocknet. Ausbeute 96,6 g; λₘₐₓ 519 nm.

### Beispiel 2

48,3 g Farbstoff aus Beispiel 1 werden in 1 500 ml Wasser suspendiert und mit 10%iger NaOH auf pH 10 gestellt. Bei 5°C wird 5,2 g Bernsteinsäureanhydrid zugegeben und der pH mit 10 %iger NaOH bei pH 8,5 gehalten. Nach 2 Stunden erhöht man die Temperatur auf 60°C und hält den pH bei 8,5. Nach dem Abkühlen wird filtriert. Durch Zusatz von Wasser und Pentandiol (9:1) erhält man eine magentafarbene Tinte mit guten anwendungstechnischen Eigenschaften; λₘₐₓ 519 nm.

Analog zu Beispiel 2 werden anstelle von Bernsteinsäureanhydrid folgende Acylierungsmittel eingesetzt:

| | | |
|---|---|---|
| Beispiel 3 | λₘₐₓ 519 nm | 5,3 g Essigsäureanhydrid |
| Beispiel 4 | λₘₐₓ 518 nm | 5,1 g Maleinsäureanhydrid |
| Beispiel 5 | λₘₐₓ 519 nm | 18,2 g Benzoylchlorid |

### Beispiel 6

20 g Cyanurchlorid werden bei 0°C in 1 500 ml Wasser suspendiert. Zu dieser Aufschlämmung werden bei 0 bis 5°C 192 ml wäßrige Flavonatlösung (10%iger) innerhalb von 2 Stunden so zugetropft, daß ein pH von 2 bis 2,5 gehalten wird. Der Ansatz wird auf Raumtemperatur erwärmt und mit 205 g einer Paste des Farbstoffes der Formel 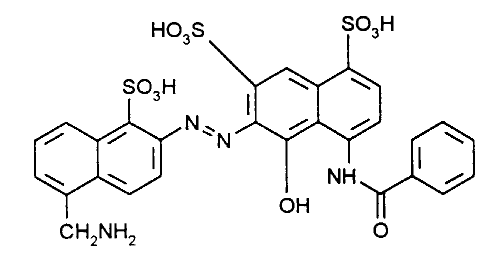 mit einem Farbstoffgehalt von 33,5 % versetzt. Es wird auf 60°C erwärmt und ein pH von 6,5 mit 10%iger NaOH 2 Stunden gehalten. Nach Zusatz von 30,2 g Pentaethylenhexamin wird auf 90°C erwärmt und diese Temperatur für 3 Stunden gehalten. Nach dem Abkühlen wird mit 350 g NaCl ausgesalzen, abgesaugt, mit 10%iger NaOH gewaschen und getrocknet. Ausbeute: 101,3 g; λₘₐₓ 518 nm.

Analog zu Beispiel 6 werden anstelle von Flavonatlösung folgende Substanzen eingesetzt:

| | | |
|---|---|---|
| Bsp. 7 | λₘₐₓ 521 nm | 4-(4-Aminobenzoylamino)-anilin-2-sulfonsäure |
| Bsp. 8 | λₘₐₓ 519 nm | 7,6 g 2,5-Diaminobenzoesäure |
| Bsp. 9 | λₘₐₓ 519 nm | 15,4 g 4,4'-Diamino-3,3'-disulfo-N,N'-diphenylharnstoff |

### Beispiel 10

50 g Farbstoff von Beispiel 6 mit einem Farbstoffgehalt von 90 % werden in 600 ml Wasser gelöst und bei 0 bis 5°C mit 4 g Bernsteinsäureanhydrid versetzt. Nach 30 min bei 0 bis 5°C wird die Lösung auf 60°C erwärmt und 30 min bei dieser Temperatur gehalten. Nach dem Abkühlen wird filtriert.

Durch Zusatz von Wasser und Pentandiol (9:1) erhält man eine magentafarbene Tinte mit guten anwendungstechnischen Eigenschaften; λₘₐₓ 520 nm.

Analog zu Beispiel 10 werden anstelle von Farbstoff aus Beispiel 6 folgende Farbstoffe eingesetzt:

| | | |
|---|---|---|
| Beispiel 11 | λₘₐₓ 519 nm | 46 g Farbstoff aus Beispiel 7 (90 %) |
| Beispiel 12 | λₘₐₓ 519 nm | 40 g Farbstoff aus Beispiel 8 (90 %) |
| Beispiel 13 | λₘₐₓ 519 nm | 50 g Farbstoff aus Beispiel 9 (90 %) |

### Beispiel 14

118 g einer Paste des Farbstoffes der Formel 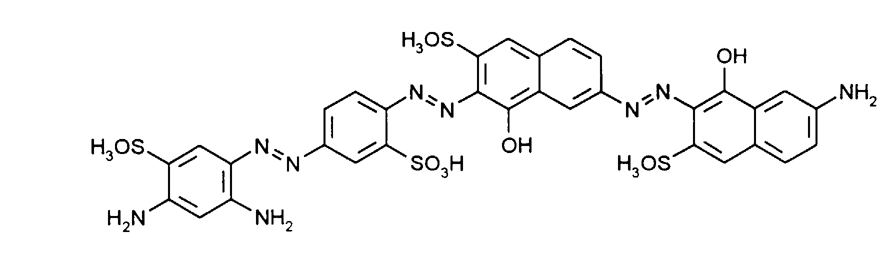 mit einem Farbstoffgehalt von 75 % werden in 350 ml Wasser suspendiert und durch Zugabe von verdünnter HCl auf pH 6 gestellt. 21,4 g Cyanurchlorid werden in 300 g Eis und 300 ml Wasser suspendiert und zugegeben. Der pH wird mit 5%iger NaOH bei 6 gehalten. Die Temperatur steigt in 1 Stunde auf Raumtemperatur und wird weitere 3 Stunden gehalten. Nach Zugabe von 53,6 g Aminoethylpiperazin wird auf 80°C erhitzt und bei dieser Temperatur 3 Stunden gerührt. Nach dem Abkühlen wird der pH auf 8 gestellt, abgesaugt und getrocknet. Ausbeute 115 g; λₘₐₓ 576 nm. Der erhaltene Farbstoff läßt sich möglicherweise durch die nachfolgende Formel ausdrücken:

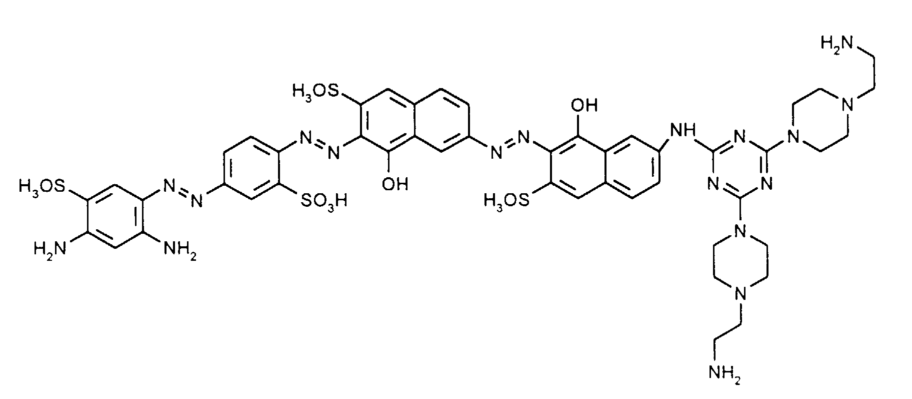

Analog zu Beispiel 14 werden folgende Farbstoffe eingesetzt:

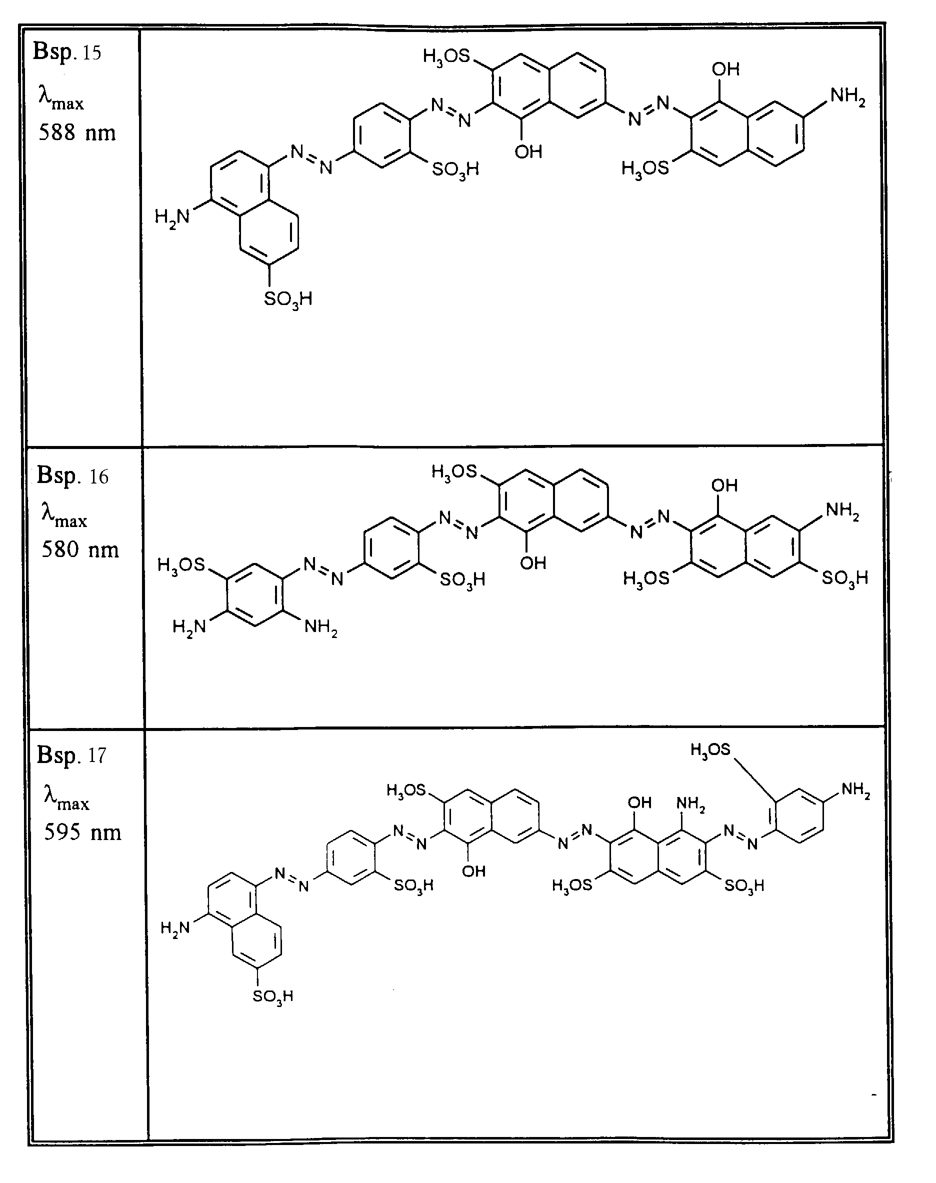

### Beispiel 18

81 g Farbstoff aus Beispiel 14 mit einem Farbstoffgehalt von 75 % werden in 1 l Wasser suspendiert und mit 5 %iger NaOH auf pH 10 gestellt. Bei 0 bis 5°C werden 5,1 g Bernsteinsäureanhydrid zugegeben und der pH mit 5 %iger NaOH bei 8,5 gehalten. Nach 2 Stunden bei 0 bis 5°C wird auf Raumtemperatur aufgewärmt, 2 Stunden nachgerührt und filtriert.

Durch Zusatz von Wasser und Pentandiol (9:1) erhält man eine schwarze Tinte mit guten anwendungstechnischen Eigenschaften; λₘₐₓ 576 nm.

Mögliche Struktur:

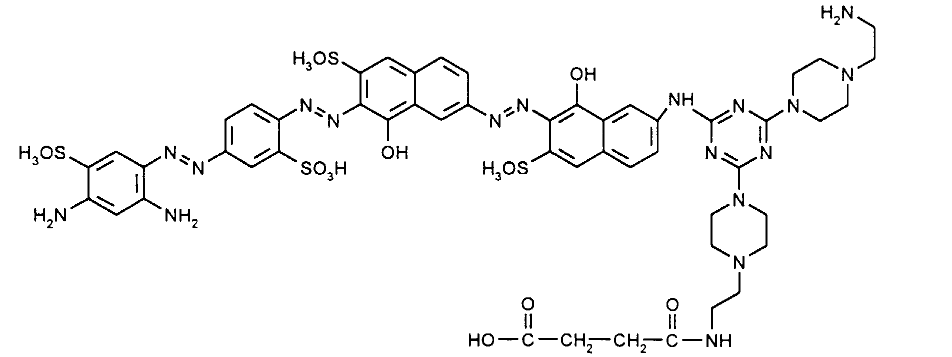

Analog zu Beispiel 18 werden anstelle von Farbstoff aus Beispiel 14 folgende Farbstoffe eingesetzt:

| | | |
|---|---|---|
| Beispiel 19 | λₘₐₓ 520 nm. | 63 g Farbstoff aus Beispiel 15 (90 %) |
| Beispiel 20 | λₘₐₓ 520 nm. | 76 g Farbstoff aus Beispiel 16 (85 %) |
| Beispiel 21 | λₘₐₓ 520 nm. | 74 g Farbstoff aus Beispiel 17g (90 %) |

### Beispiel 22

39,2 g 8-Amino-1-naphthol-3,6-disulfonsäure mit einem Gehalt von 81,3 % werden in 150 ml Wasser angerührt und durch Zusatz von 42 ml 5 N Natronlauge gelöst. Diese Lösung wird im Verlauf von 75 Minuten bei 0 bis 3°C so auf eine Suspension von 19,2 g Cyanurchlorid in 150 ml Eiswasser ausgetragen, daß der pH nicht über 5,2 ansteigt. Das Gemisch wird zunächst noch 40 Minuten bei 0 bis 3°C nachgerührt. Man läßt die Temperatur dann unter Halten des pH bei 5,0 bis 5,2 auf Raumtemperatur ansteigen und rührt einige Stunden weiter, bis der pH konstant bleibt, und etwa 42 ml 5 N Natronlauge verbraucht sind.

Nach beendeter Reaktion wird das ausgefallene Kondensat abgesaugt und durch Auflösen in Wasser und Ausfällen mit wenig Kochsalz umgefällt.

Man erhält ein chromatographisch einheitliches Reaktionsprodukt, welches in einem Volumen von ca. 1,5 l bei pH 8,5 und einer Temperatur von 5 bis 10°C mit dem auf üblichem Weg hergestellten Diazoniumsalz von 2-Aminonaphthalin-1,5-disulfonsäure angekuppelt wird. Am nächsten Morgen wird die tiefrote Farbstofflösung mit 8 g eines handelsüblichen Klärhilfsmittels versetzt und nach einstündigem Verrühren abfiltriert. Das Filtrat wird zur weiteren Reinigung auf einer Ultrafiltrations-Laboranlage an einer semipermeablen Membran mit einer Trenngrenze von 15 000 Dalton behandelt. Dabei wird das Volumen zunächst auf 1 000 ml reduziert und danach nach Auffüllen von einem Liter Wasser wiederum auf 1 000 ml eingeengt. Der Natriumchlorid-Gehalt dieser Lösung beträgt jetzt nur noch 0,31 Gew.-%.

Das salzarme Konzentrat wird nun mit 22 g Pentaethylenhexamin versetzt und auf 80°C erwärmt. Nach einer Stunde Rühren bei 80°C läßt sich im Dünnschichtchromatogramm keine Ausgangsverbindung mehr nachweisen.

Die Lösung wird anschließend durch Eintauchen in ein Eisbad auf 10°C abgekühlt und mit 10 g Bernsteinsäureanhydrid versetzt. Man läßt die Temperatur auf Raumtemperatur ansteigen, hält den pH durch Zutropfen von insgesamt 22 ml 5 N Natronlauge bei 8,5 bis 9,0 und rührt so lange bei Raumtemperatur, bis keine Natronlauge mehr verbraucht wird

Nach beendeter Reaktion liegt eine 15,2 %ige Lösung des erfindungsgemäßen Farbstoffes vor.

Mögliche Struktur:

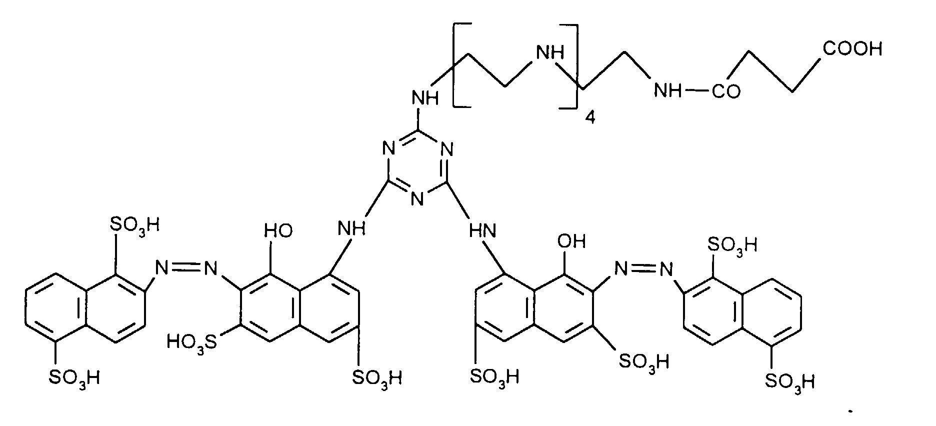

Der λₘₐₓ-Wert beträgt 516 nm. Die Lösung färbt Polyamidfasern, Wolle und Leder bei den üblichen Ausziehverfahren in lichtechten Rottönen. Verdünnt man die Lösung mit einem 9:1-Gemisch aus Wasser und 1,5 -Pentandiol, so erhält man eine wertvolle Aufzeichnungsflüssigkeit, mit der sich auf den gebräuchlichen Schreibpapieren naßfeste ink-jet-Drucke in lichtechtem Magentaton erzielen lassen.

Analog zu Beispiel 22 werden anstelle von 10 g Bernsteinsäureanhydrid folgende Substanzen in folgender Menge eingesetzt:

| | |
|---|---|
| Beispiel 23 | 10 g Essigsäureanhydrid |
| Beispiel 24 | 20 g Essigsäureanhydrid |
| Beispiel 25 | 14,8 g Phthalsäureanhydrid |
| Beispiel 26 | 14 g Benzoylchlorid |
| Beispiel 27 | 28 g Benzoylchlorid |
| Beispiel 29 | 11 g Chlorameisensäureethylester |
| Beispiel 30 | 12 g Phenylisocyanat |

### Beispiel 31

301,5 g einer Paste des Farbstoffes der Formel 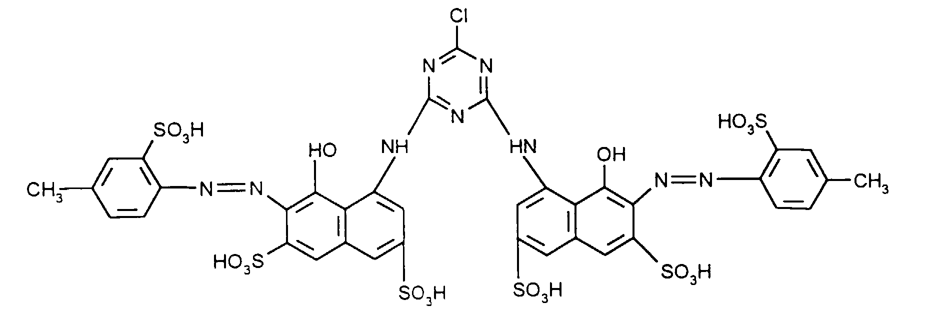 mit einem Farbstoffgehalt von 38,0 % werden in 750 ml Wasser suspendiert und durch Zutropfen von 5 N Natronlauge bei pH 9,0 gelöst. Die Lösung wird mit 61,9 g einer 50 %igen wäßrigen Einstellung von Polyethylenimin mit einem mittleren Molekulargewicht von 1 500 Dalton versetzt und eine Stunde lang bei 80°C gerührt, bis im Dünnschichtchromatogramm kein Ausgangsfarbstoff mehr zu erkennen ist.

Man läßt die Lösung auf Raumtemperatur abkühlen, tropft innerhalb von einer Stunde 14 g Benzoylchlorid zu und hält mit insgesamt 24 ml 5 N Natronlauge auf pH 8,5. Nach beendeter Reaktion wird durch Zusatz von 2 N Salzsäure der erfindungsgemäße Farbstoff gefällt.

Mögliche Struktur:

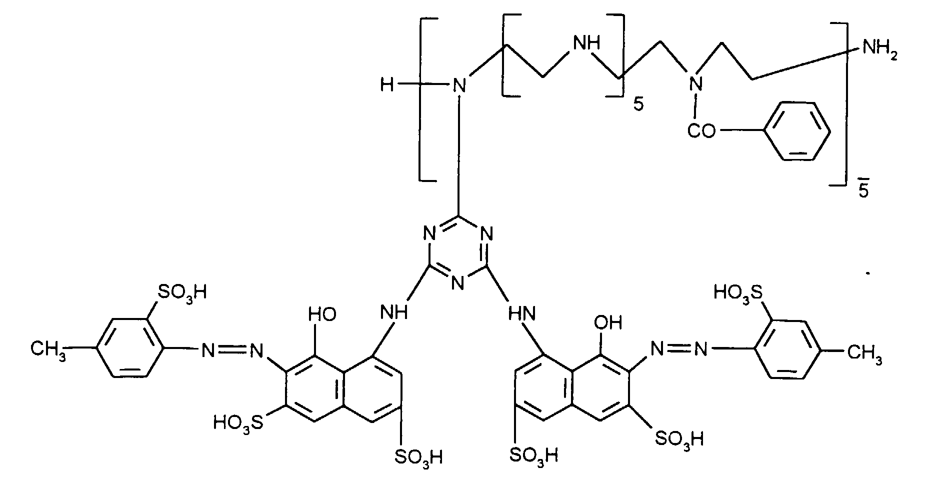

Er wird abgesaugt, mit Wasser gewaschen und unter vermindertem Druck bei 60°C getrocknet. Man erhält 173 g eines roten Pulvers, welches in Wasser bei Zusatz von verdünnter Natronlauge gut löslich ist (λₘₐₓ 514 nm). Durch einstündiges Verrühren einer solchen Lösung mit 1 Gew.-% eines Klärhilfsmittels, Filtrieren der Lösung und Einstellen mit Wasser/1,5-Pentandiol 9:1 gelangt man zu einer magentafarbenen Tinte mit guten anwendungstechnischen Eigenschaften.

Analog zu Beispiel 31 werden anstelle von 14 g Benzoylchlorid die folgenden Substanzen in folgender Menge eingesetzt:

| | |
|---|---|
| Beispiel 32 | 28 g Benzoylchlorid |
| Beispiel 33 | 10 g Essigsäureanhydrid |
| Beispiel 34 | 20 g Essigsäureanhydrid |
| Beispiel 35 | 14 g Ethoxyessigsäurechlorid |

### Beispiel 36

30 g 93,5 %iges Polyallylamin-Hydrochlorid mit einem mittleren Molekulargewicht von 9 250 Dalton werden in 1 800 ml Wasser verrührt und tropfenweise mit ca. 60 ml 5 N Natronlauge versetzt, bis ein pH-Wert von 9,5 erreicht ist. In diese Lösung trägt man 72,5 g Farbstoff der Formel 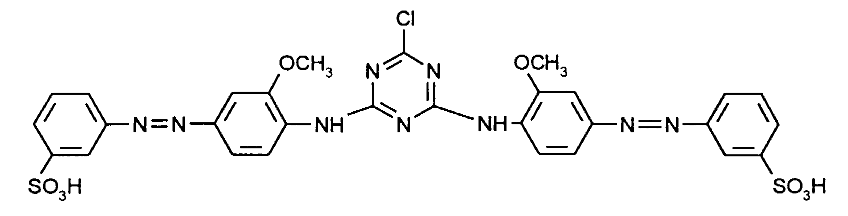 in Form einer feuchten Paste ein und verrührt das Ganze unter Einhaltung eines pH-Wertes von 9,0 erst zwei Stunden bei Raumtemperatur und dann zwei Stunden bei 70°C. Nach beendeter Reaktion wird der Ansatz über einer semipermeablen Membran mit einer Trenngrenze von 3 000 Dalton druckpermeiert und auf ein Volumen von einem Liter aufkonzentriert. Man erhält eine salzarme, ca. 8,6 gew.-%ige Lösung des erfindungsgemäßen Farbstoffes.

Mögliche Struktur:

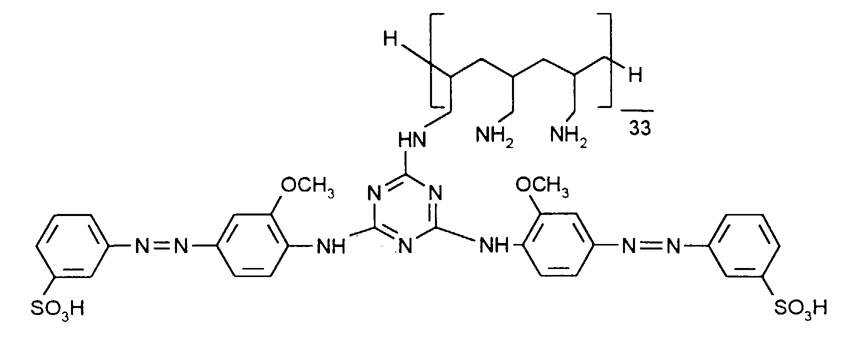

Durch Verdünnen der Lösung mit 2 100 ml Wasser und 350 ml Diethylenglykol gelangt man zu einer gelben (λₘₐₓ = 400 nm) Aufzeichnungsflüssigkeit mit guten ink-jet-Druckeigenschaften.

### Beispiel 37

70 g 93,5 %iges Polyallylamin-Hydrochlorid mit einem mittleren Molekulargewicht von 9 250 Dalton werden in 2000 ml Wasser gelöst und mit 140 ml 5 N Natronlauge versetzt. Innerhalb einer Stunde trägt man 394 g einer Paste des Farbstoffes der Formel 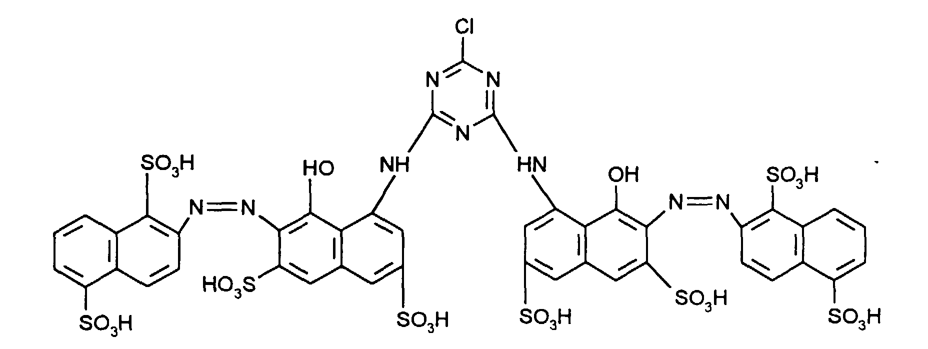 mit einem Farbstoffgehalt von 35,0 % ein und läßt dabei durch Zutropfen von 5 N Natronlauge den pH-Wert nicht unter 9,0 sinken. Man erwärmt das Gemisch auf 70°C und rührt zwei Stunden bei pH 9,0 und 70°C nach. Die Lösung wird anschließend in einer Ultrafiltrations-Laboranlage nachbehandelt. Man erhält eine salzarme Lösung des erfindungsgemäßen Farbstoffes.

Mögliche Struktur:

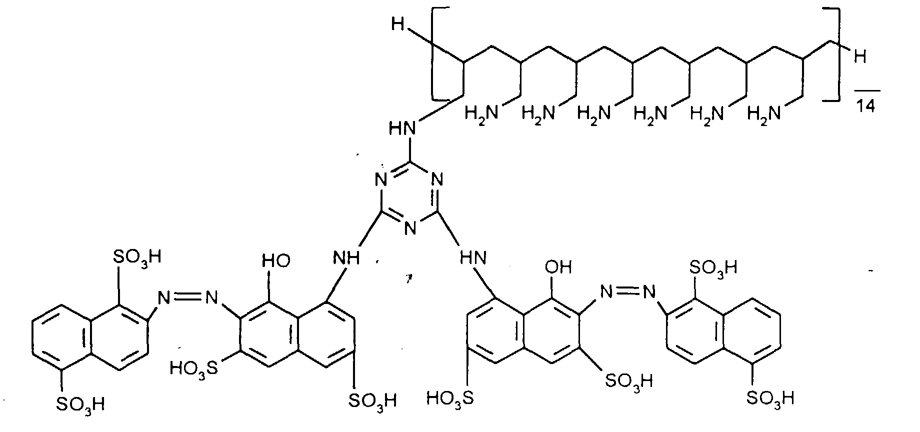

Aus dieser Lösung lassen sich magentafarbene Tinten (λₘₐₓ = 539 nm) mit guten anwendungstechnischen Eigenschaften herstellen.

### Beispiel 38

887 ml einer nach Vorschrift von Beispiel 37 hergestellten 10 gew.-%igen Farbstofflösung wird unter Kühlen in einem Eisbad bei 10°C mit 10 g Bernsteinsäureanhydrid versetzt. Man läßt die Temperatur auf Raumtemperatur ansteigen und rührt so lange bei pH 8,5 bis 9,0, bis zum Halten des pH-Wertes keine Natronlauge mehr verbraucht wird.

Nach beendeter Reaktion liegt eine Lösung des erfindungsgemäßen Farbstoffes vor.

Mögliche Struktur:

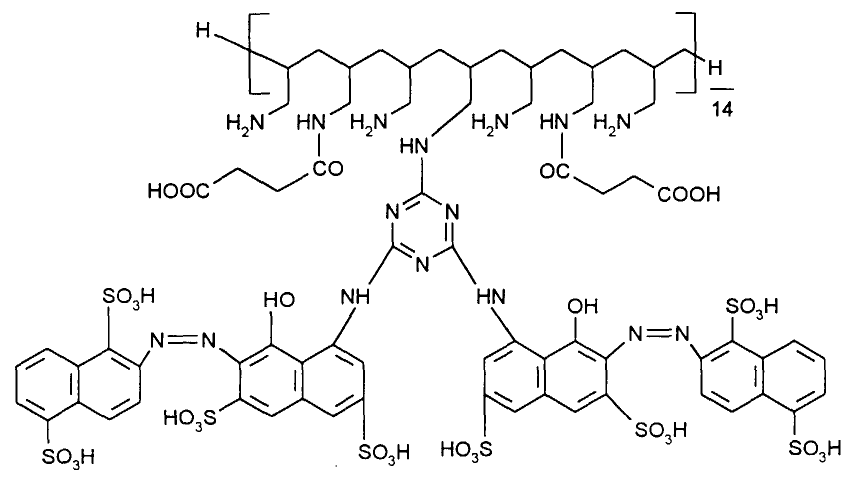

Durch Verdünnen mit Wasser unter Zusatz von 10 Gew.-% 1,5-Pentandiol erhält man eine wertvolle magentafarbene Aufzeichnungsflüssigkeit mit guten anwendungstechnischen Eigenschaften

Analog zu Beispiel 38 werden anstelle von 10 g Bernsteinsäureanhydrid folgende Substanzen in folgender Menge eingesetzt.

| | |
|---|---|
| Beispiel 39 | 5 g Bernsteinsäureanhydrid |
| Beispiel 40 | 7 g Benzoylchlorid |
| Beispiel 41 | 14 g Benzoylchlorid |

## Patentansprüche

1. Farbstoffe, erhältlich durch Reaktion von
A) Polyaminen, die mindestens 2 primäre oder sekundäre Aminogruppen enthalten, mit
B) reaktiven Verbindungen, die mindestens zwei gegenüber primären und sekundären Aminen reaktive Gruppen enthalten, in einer Menge von 5 bis 95 Mol-%, bezogen auf die primären und sekundären Aminogruppen des Polyamins und
C) Farbstoffen, die mindestens eine acylierbare primäre oder sekundäre Aminogruppe enthalten, in einer Menge von 10 bis 200 Mol-%, bezogen auf die reaktive Verbindung und
D) Carbonyl- oder Sulfonylgruppen-haltigen Acylierungsmitteln in einer Menge von 5 bis 95 Mol-%, bezogen auf die primären und sekundären Aminogruppen des Polyamins.

2. Farbstoffe gemäß Anspruch 1, dadurch erhältlich, daß als Polyamine A) solche der Formel (I) 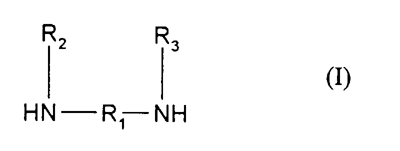 verwendet werden, worin
R₁ = lineares oder verzweigtes C₂-C₂₀-Alkylen, gegebenenfalls durch C₁-C₄-Alkyl substituiertes C₆-C₁₀-Arylen, 2 oder mehrere, gegebenenfalls durch C₁-C₄-Alkyl substituierte C₆-C₁₀-Arylen-Einheiten, die gegebenenfalls durch C₁-C₄-Alkylen unterbrochen sind, n lineare oder verzweigte durch (n-1) Aminogruppen unterbrochene C₂-C₂₀-aliphatische Einheiten mit n = 2 bis 25 000, wobei diese als Bedeutungen von R₁ aufgeführten Reste gegebenenfalls aminogruppenhaltig sind,
R₂ und R₃ = unabhängig voneinander Wasserstoff, C₁-C₁₀-Alkyl, C₆-C₁₀-Aryl oder zusammen eine C₂-C₁₀-Alkylen oder C₆-C₁₀-Aryleneinheit bilden.

3. Farbstoffe gemäß Anspruch 1, dadurch erhältlich, daß mindestens eines der nachstehenden Polyamine verwendet wird:
a) Diamine der Formel (II)
H₂N-R-NH₂ (II),
worin
R für C₂-C₉-Alkylen oder einen zweiwertigen Rest der Formel 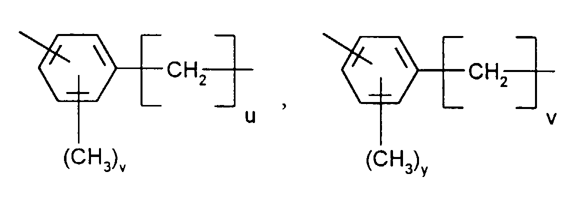 oder 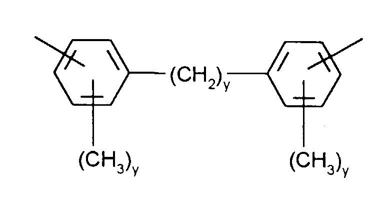 steht, worin
u für 1 oder 2,
v für 0 oder 1 und
y für 1, 2 oder 3 stehen
b) Piperazine der Formel 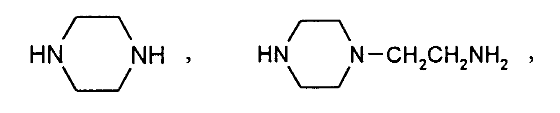 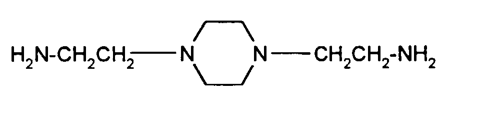
c) Polyamine der Formel (III) 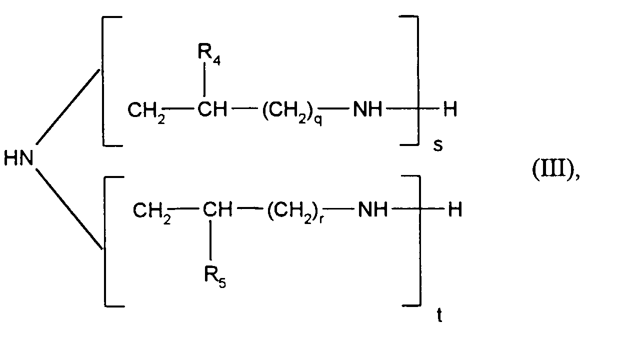 worin
R₄, R₅ unabhängig voneinander für Wasserstoff, Methyl oder Ethyl,
q, r unabhängig voneinander für 0, 1, 2, 3 oder 4 und
s, t unabhängig voneinander für 1, 2, 3, 4, 5 oder 6 stehen,
d) Polyamine, erhältlich durch Polymerisation von C₂-C₁₀-Alkyleniminen,
e) Polyamine, erhältlich durch Polymerisation von ungesättigten aliphatischen C₃-C₁₀-Aminen, in denen die Aminogruppe allylständig ist, oder aromatischen C₆-C₁₀-Aminen die ungesättigte aliphatische Reste tragen, deren Doppelbindung in Konjugation mit dem aromatischen System steht,
f) Polyamine, erhältlich durch Kondensation von Polyaminen der Formel (III) mit aliphatischen C₂-C₁₀-Dihalogeniden.

4. Farbstoffe gemäß Anspruch 1, dadurch erhältlich, daß die eingesetzten Farbstoffe C) Phthalocyanin-, Nitroaryl-, Triphenylmethan-, Oxazin-, Triphendioxazin-, Phenazin-, Stilben-, Thiazin- oder Xanthenfarbstoffe, vornehmlich aber der Anthrachinon-, Monoazo-, Disazo- und Polyazofarbstoffe, sowie weiterhin Metallkomplexfarbstoffe, wie 1:1-Nickel-, 1:1-Kupfer- oder 1:1-Chromkomplexe, 1:2-Kobaltkomplexe oder symmetrische oder unsymmetrische 1:2-Chromkomplexe mit einer metallkomplexbildenden o,o'-Dihydroxy-, o-Hydroxy-o'-amino- oder o-Carboxy-o'-hydroxy-Azo- oder -Azomethinstruktur bedeuten.

5. Farbstoffe gemäß Anspruch 1, dadurch erhältlich, daß die reaktiven Verbindungen B) sich unabhängig voneinander mindestens von einer aliphatischen, araliphatischen, aromatischen oder heteroaromatischen reaktiven Gruppe ableiten.

6. Farbstoffe gemäß Anspruch 1, dadurch erhältlich, daß die reaktiven Verbindungen B) unabhängig voneinander mindestens einen der nachstehenden Reste besitzen:
-SO₂-A, -CO-A, -SO₂-CH=CH₂,
-SO₂-CH₂CH₂-A, -CO-CH₂CH₂-A, -CONH-CH₂-A,
-SO₂NH-CH₂CH₂-A, -NHCO-CH₂CH₂-A, 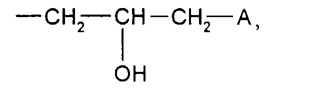 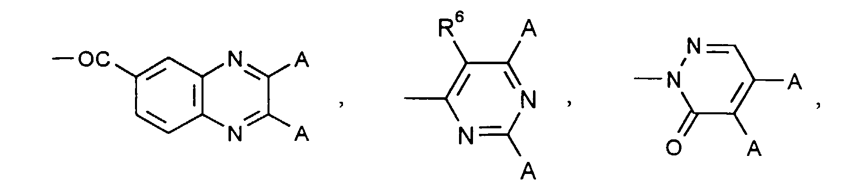 mit R⁶ = H, Cl, CH₃, CN 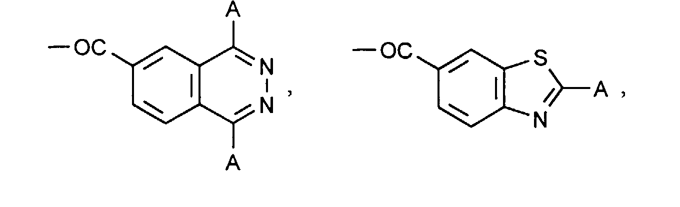 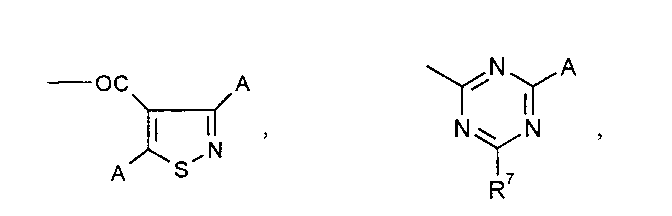 mit R⁷ =NH₂, 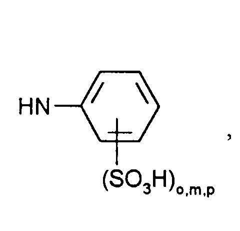 OCH₃ oder OCH₂CH₂OCH₃ bevorzugt einen Rest der Formel 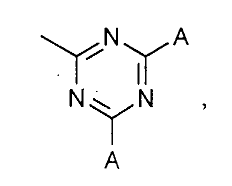 besitzen, worin
A eine Abgangsgruppe darstellt und beispielsweise Cl, F, OSO₃H, N(CH₃)₃, SO₂CH₃, OPO₃H oder SO₂C₂H₅ bedeutet.

7. Farbstoffe gemäß Anspruch 1, dadurch gekennzeichnet, daß die reaktive Verbindung B) für Halogentriazin, insbesondere Cyanurfluorid, Cyanurchlorid oder Cyanurbromid steht.

8. Farbstoffe gemäß Anspruch 1, dadurch gekennzeichnet, daß die reaktive Verbindung B) und der Farbstoff C) gemeinsam durch einen Reaktivfarbstoff mit mindestens einer gegenüber primären und sekundären Aminen reaktiven Gruppe dargestellt werden.

9. Farbstoffe gemäß Anspruch 1, dadurch erhältlich, daß als Carbonyl- oder Sulfonylgruppen-haltiges Acylierungsmittel Carbonsäurehalogenide, -ester oder -anhydride, Halogenkohlensäureester, Isocyanate oder Sulfonsäurehalogenide, -ester oder Isothiocyanate verwendet werden.

10. Farbstoffe, erhältlich durch Reaktion von
A1) Polyaminen, die ihrerseits erhältlich sind durch Polymerisation von
ungesättigten aliphatischen C₃-C₁₀-Aminen, in denen die Aminogruppe allylständig ist, insbesondere Allylamin oder Diallylamin, oder
aromatischen Aminen, die ungesättigte aliphatische Reste in Konjugation mit dem aromatischen System tragen, insbesondere Methyl-, Ethyl- oder Propylaminoethylstyrol oder Aminostyrol,
mit
B) reaktiven Verbindungen, die mindestens zwei gegenüber primären und sekundären Aminen reaktive Gruppen enthalten, in einer Menge von 5 bis 95 Mol-%, bezogen auf die primären und sekundären Aminogruppen des Polyamins und
C) Farbstoffen, die mindestens eine acylierbare primäre oder sekundäre Aminogruppe enthalten, in einer Menge von 10 bis 200 Mol-%, bezogen auf die reaktive Verbindung,
wobei der Farbstoff C) jeweils an die reaktive Verbindung B) gebunden ist.

11. Verfahren zum Färben und Bedrucken von Cellulose/Amidgruppen-haltigen Materialien, insbesondere Papier, Baumwolle und Leder, dadurch gekennzeichnet, daß mindestens ein Farbstoff gemäß Anspruch 1 oder Anspruch 10 verwendet wird.

12. Drucktinten, enthaltend mindestens einen Farbstoff gemäß Anspruch 1 oder Anspruch 10.

13. Drucktinten, enthaltend
- 0,5 bis 20 Gew.-% eines oder mehrerer Farbstoffe gemäß Anspruch 1 oder 10,
- 50 bis 99,5 Gew.-% Wasser,
- 0 bis 30 Gew.-% eines oder mehrerer organischer Lösungsmittel und
- 0 bis 30 Gew.-% Viskosität und/oder Oberflächenspannung beeinflussende Zusätze,
wobei sich die Summe der Inhaltsstoffe auf 100 % ergänzt.

14. Verwendung der Drucktinten gemäß Anspruch 12 oder 13 als Aufzeichnungsflüssigkeit für ink-jet-Aufzeichnungssysteme.

15. Substrate gefärbt oder bedruckt mit wenigstens einem Farbstoff gemäß wenigstens einem der Ansprüche 1 bis 10.

## Claims

1. Dyestuffs obtainable by reacting
A) polyamines containing at least 2 primary or secondary amino groups with
B) reactive compounds containing at least two groups which are reactive towards primary and secondary amines in an amount of 5 to 95 mol %, relative to the primary and secondary amino groups of the polyamine, and
C) dyestuffs containing at least one acylatable primary or secondary amino group in an amount of 10 to 200 mol %, relative to the reactive compound, and
D) carbonyl- or sulphonyl-containing acylating agents in an amount of 5 to 95 mol %, relative to the primary and secondary amino groups of the polyamine.

2. Dyestuffs according to Claim 1, obtainable by using, as polyamines A), those of the formula (I) 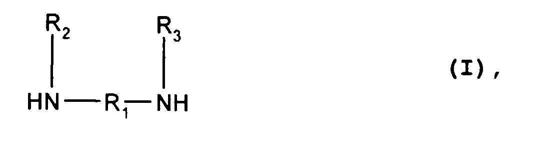 in which
R₁ is linear or branched C₂-C₂₀-alkylene, unsubstituted or C₁-C₄-alkyl-substituted C₆-C₁₀-arylene, 2 or more C₆-C₁₀-arylene units which are unsubstituted or substituted by C₁-C₄-alkyl and may be interrupted by C₁-C₄-alkylene, n linear or branched C₂-C₂₀-aliphatic units interrupted by (n-1) amino groups where n is 2 to 25,000, it being possible for the radicals given as meanings for R₁ to contain amino groups,
R₂ and R₃, independently of one another, are hydrogen, C₁-C₁₀-alkyl, C₆-C₁₀-aryl or together form a C₂-C₁₀-alkylene or C₆-C₁₀-arylene unit.

3. Dyestuffs according to Claim 1, obtainable by using at least one of the polyamines below:
a) diamines of the formula (II)
H₂N-R-NH₂ (II),
in which
R represents C₂-C₉-alkylene or a divalent radical of the formula 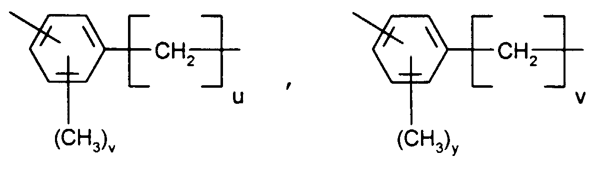 or 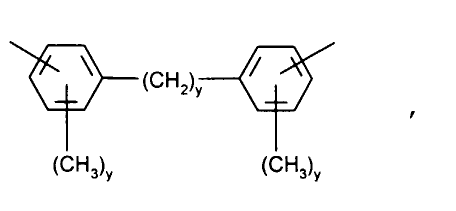 in which
u represents 1 or 2,
v represents 0 or 1 and
y represents 1, 2 or 3
b) piperazines of the formula 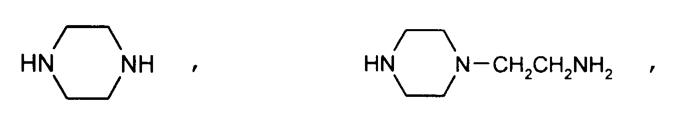 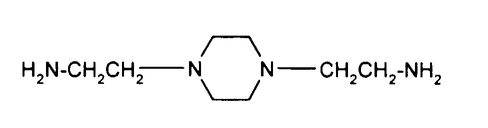
c) polyamines of the formula (III) 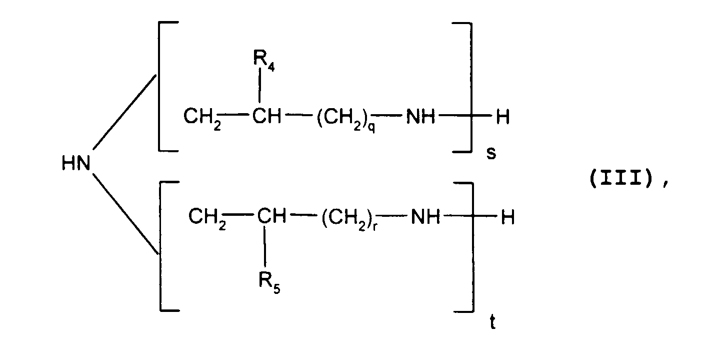 in which
R₄, R₅, independently of one another, represent hydrogen, methyl or ethyl,
q, r, independently of one another, represent 0, 1, 2, 3 or 4 and
s, t, independently of one another, represent 1, 2, 3, 4, 5 or 6,
d) polyamines obtainable by polymerization of C₂-C₁₀-alkyleneimines,
e) polyamines obtainable by polymerization of unsaturated aliphatic C₃-C₁₀-amines in which the amino group is in the allyl position or aromatic C₆-C₁₀-amines carrying unsaturated aliphatic radicals whose double bond is conjugated with the aromatic system,
f) polyamines obtainable by the condensation of polyamines of the formula (III) with aliphatic C₂-C₁₀-dihalides.

4. Dyestuffs according to Claim 1, obtainable by using, as the dyestuffs C), phthalocyanine, nitroaryl, triphenylmethane, oxazine, triphendioxazine, phenazine, stilbene, thiazine or xanthene dyestuffs, but especially anthraquinone, monoazo, disazo and polyazo dyestuffs and furthermore metal complex dyestuffs, such as 1:1 nickel complexes, 1:1 copper complexes or 1:1 chromium complexes, 1:2 cobalt complexes or symmetrical or unsymmetrical 1:2 chromium complexes containing a metal-complexing o,o'-dihydroxy-, o-hydroxy-o'-amino- or o-carboxy-o'-hydroxy-azo- or -azomethine structure.

5. Dyestuffs according to Claim 1, obtainable by using reactive compounds B) which, independently of one another are derived at least from one aliphatic, araliphatic, aromatic or heteroaromatic reactive group.

6. Dyestuffs according to Claim 1, obtainable by using reactive compounds B) which, independently of one another, contain at least one of the following radicals:
-SO₂-A, -CO-A, -SO₂-CH=CH₂,
-SO₂-CH₂CH₂-A, -CO-CH₂CH₂A, -CONH-CH₂-A,
-SO₂NH-CH₂CH₂-A, -NHCO-CH₂CH₂-A, 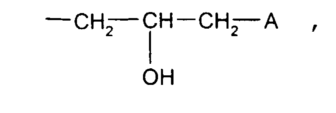 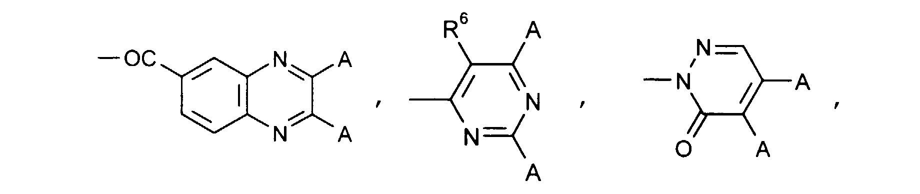 where R⁶ is H, Cl, CH₃, CN 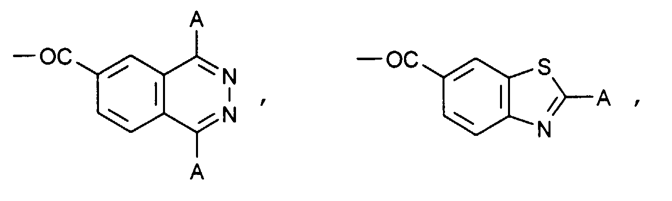 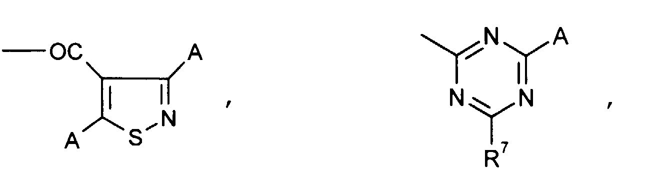 where R⁷ is NH₂, 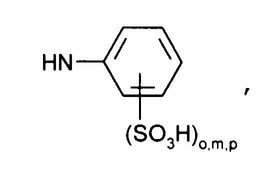 OCH₃ or OCH₂CH₂OCH₃ preferably a radical of the formula 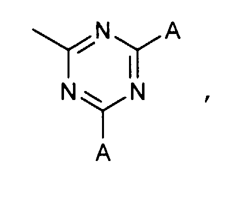 in which
A represents a leaving group and denotes, for example, Cl, F, OSO₃H, N(CH₃)₃, SO₂CH₃, OPO₃H or SO₂C₂H₅.

7. Dyestuffs according to Claim 1, characterized in that the reactive compound B) represents halogenotriazine, in particular cyanuric fluoride, cyanuric chloride or cyanuric bromide.

8. Dyestuffs according to Claim 1, characterized in that the reactive compound B) and the dyestuff C) together are represented by a reactive dyestuff containing at least one group which is reactive towards primary and secondary amines.

9. Dyestuffs according to Claim 1, obtainable by using, as the carbonyl- or sulphonyl-containing acylating agent, carbonyl halides, carboxylic esters or anhydrides, halogenoformates, isocyanates or sulphonyl halides, sulphonic esters or isothiocyanates.

10. Dyestuffs obtainable by reacting
A1) polyamines which in turn are obtainable by polymerization of unsaturated aliphatic C₃-C₁₀-amines in which the amino group is in the allyl position, in particular allylamine or diallylamine, or
aromatic amines carrying unsaturated aliphatic radicals which are conjugated with the aromatic system, in particular methyl-, ethyl- or propylaminoethylstyrene or aminostyrene,
with
B) reactive compounds containing at least two groups which are reactive towards primary and secondary amines in an amount of 5 to 95 mol %, relative to the primary and secondary amino groups of the polyamine, and
C) dyestuffs containing at least one acylatable primary or secondary amino group in an amount of 10 to 200 mol %, relative to the reactive compound,
in which dyestuff C) is in each case bonded to the reactive compound B).

11. Process for colouring and printing cellulose-/amido-containing materials, in particular paper, cotton and leather, characterized in that at least one dyestuff according to Claim 1 or Claim 10 is used.

12. Printing inks containing at least one dyestuff according to Claim 1 or Claim 10.

13. Printing inks containing
- 0.5 to 20 % by weight of one or more dyestuffs according to Claim 1 or 10,
- 50 to 99.5 % by weight of water,
- 0 to 30 % by weight of one or more organic solvents,
and
- 0 to 30 % by weight of viscosity and/or surface tension modifiers,
the sum of the ingredients adding up to 100 %.

14. Use of the printing inks according to Claim 12 or 13 as recording fluid for ink-jet recording systems.

15. Substrates coloured or printed with at least one dyestuff according to at least one of Claims 1 to 10.

## Revendications

1. Colorants qui peuvent être obtenus par réaction
A) de polyamines, qui contiennent au moins 2 groupes amino primaires ou secondaires avec
B) des composés réactifs qui contiennent au moins deux groupes réactifs à l'égard des amines primaires et secondaires, en une quantité de 5 à 95 mol %, par rapport aux groupes amino primaires et secondaires de la polyamine et
C) des colorants, qui contiennent au moins un groupe amino primaire ou secondaire acylable, en une quantité de 10 à 200 mol % par rapport au composé réactif et
D) des agents d'acylation contenant des groupes carbonyle ou sulfonyle en une quantité de 5 à 95 mol % par rapport aux groupes amino primaires et secondaires de la polyamine.

2. Colorants selon la revendication 1 qui peuvent être obtenus en utilisant comme polyamines A) des polyamines de formule (I) 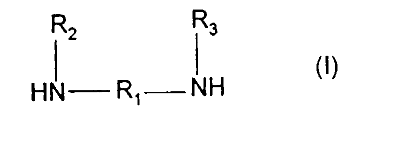 où
R₁ = alkylène en C₂-C₂₀ linéaire ou ramifié, arylène en C₆-C₁₀ éventuellement substitué par alkyle en C₁-C₄, deux ou plusieurs unités arylène en C₆-C₁₀ éventuellement substituées par alkyle en C₁-C₄, qui sont éventuellement interrompues par alkylène en C₁-C₄, n unités aliphatiques en C₂-C₂₀ linéaires ou ramifiées, interrompues par (n-1) groupes amino, avec n = 2 à 25 000, où ces restes cités à titre de significations de R₁ contiennent éventuellement des groupes amino,
R₂ et R₃ = indépendamment l'un de l'autre hydrogène, alkyle en C₁-C₁₀, aryle en C₆-C₁₀ ou forment ensemble une unité alkylène en C₂-C₁₀ ou arylène en C₆-C₁₀.

3. Colorants selon la revendication 1 qui peuvent être obtenus en utilisant au moins l'une des polyamines suivantes :
a) des diamines de formule (II)
H₂N-R-NH₂ (II)
où
R représente alkylène en C₂-C₉ ou un reste divalent de formule 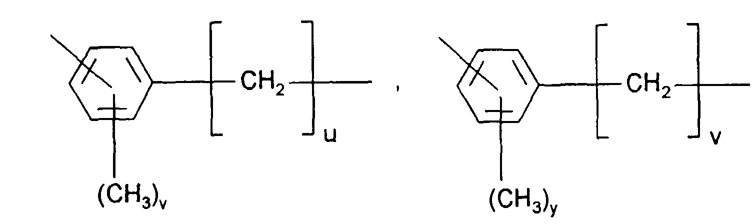 ou 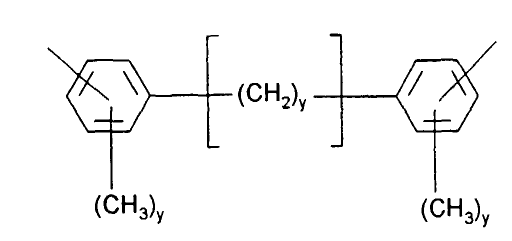 et où
u représente 1 ou 2,
v représente 0 ou 1 et
y représente 1, 2 ou 3
b) des pipérazines de formule 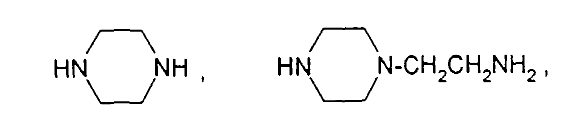 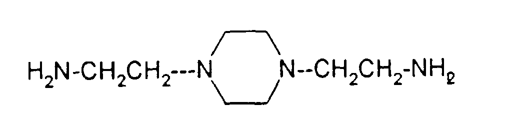
c) des polyamines de formule (III) 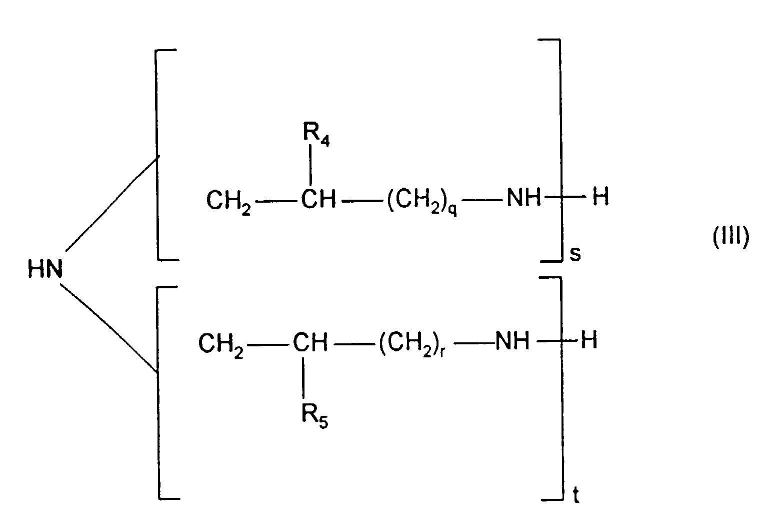 où
R₄, R₅ représentent indépendamment l'un de l'autre hydrogène, méthyle ou éthyle,
q, r représentent indépendamment l'un de l'autre 0, 1, 2, 3 ou 4 et
s, t représentent indépendamment l'un de l'autre 1, 2, 3, 4, 5 ou 6,
d) des polyamines qui peuvent être obtenues par polymérisation d'alkylène-imine en C₂-C₁₀,
e) des polyamines qui peuvent être obtenues par polymérisation d'amines aliphatiques insaturées en C₃-C₁₀ où le groupe amino est en position allyle ou d'amines aromatiques en C₆-C₁₀ qui portent des restes aliphatiques insaturés dont la double liaison est en conjugaison avec le système aromatique,
f) des polyamines qui peuvent être obtenues par condensation de polyamines de formule (III) avec des dihalogénures aliphatiques en C₂-C₁₀.

4. Colorants selon la revendication 1, qui peuvent être obtenus par le fait que les colorants C) utilisés représentent des colorants de phtalocyanine, de nitroaryle, de triphénylméthane, d'oxazine, de triphényldioxazine, de phénazine, de stilbène, de thiazine ou de xanthène, mais surtout des colorants d'anthraquinone, monoazoïques, disazoïques et polyazoïques, et également des colorants de complexes métalliques, comme les complexes de nickel 1:1, de cuivre 1:1 ou de chrome 1:1, les complexes de cobalt 1:2 ou les complexes de chrome 1:2 symétriques ou disymétriques avec une structure formatrice de complexes métalliques o,o'-dihydroxy-, o-hydroxy-o'-amino- ou o-carboxy-o'-hydroxy-azoïque ou -azométhinique.

5. Colorants selon la revendication 1, qui peuvent être obtenus par le fait que les composés réactifs B) dérivent indépendamment les uns des autres d'au moins un groupe réactif aliphatique, araliphatique, aromatique ou hétéroaromatique.

6. Colorants selon la revendication 1, qui peuvent être obtenus par le fait que les composés réactifs B) possèdent indépendamment les uns des autres au moins l'un des restes suivants :
-SO₂-A, -CO-A, -SO₂-CH=CH₂, -SO₂-CH₂CH₂-A, -CO-CH₂CH₂A, -CONH-CH₂-A,
-SO₂NH-CH₂CH₂-A, -NHCO-CH₂CH₂-A, 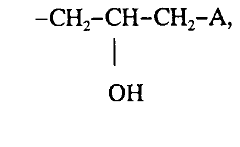 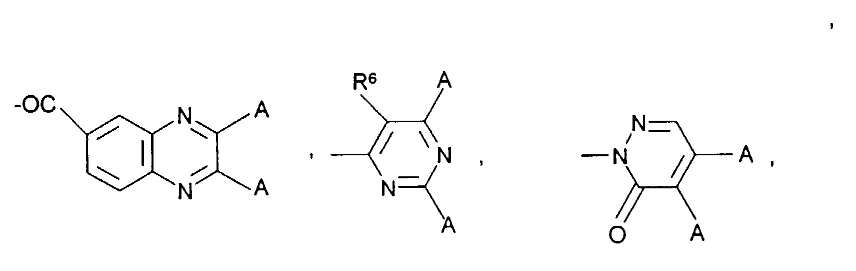 avec R⁶ = H, Cl, CH₃, CN, 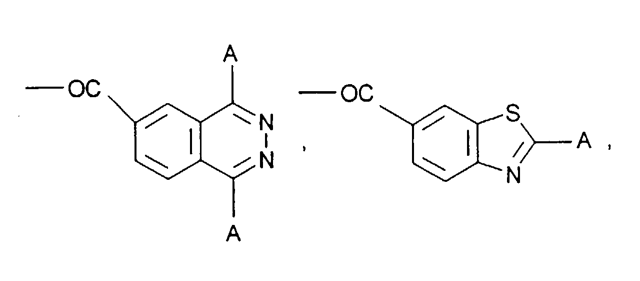 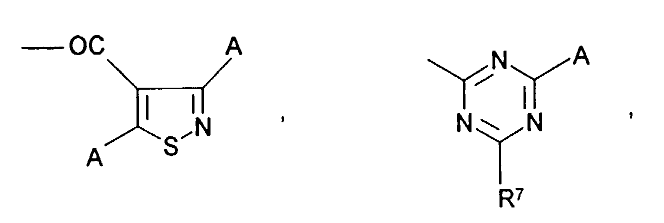 avec R⁷ = NH₂, 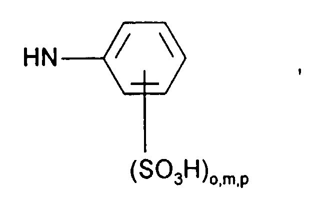 OCH₃ ou OCH₂CH₂OCH₃ et de préférence un reste de formule 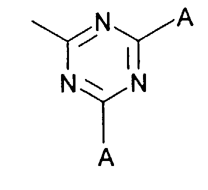 où
A représente un groupe partant et signifie par exemple Cl, F, OSO₃H, N(CH₃)₃, SO₂CH₃, OPO₃H ou SO₂C₂H₅.

7. Colorants selon la revendication 1, caractérisés en ce que le composé réactif B) représente une halogénotriazine, en particulier le fluorure de cyanuryle, le chlorure de cyanuryle ou le bromure de cyanuryle.

8. Colorants selon la revendication 1, caractérisés en ce que le composé réactif B) et le colorant C) sont représentés ensemble par un colorant réactif ayant au moins un groupe réactif à l'égard des amines primaires et secondaires.

9. Colorants selon la revendication 1, qui peuvent être obtenus par le fait que l'on utilise comme agent d'acylation contenant des groupes carbonyles ou sulfonyles des halogénures, esters, ou anhydrides d'acides carboxyliques, des esters d'acides halogénocarboniques, des isocyanates ou des halogénures, esters d'acides sulfiniques ou des isothiocyanates.

10. Colorants qui peuvent être obtenus par réaction
A1) de polyamines qui, de leur côté, peuvent être obtenues par polymérisation
d'amines aliphatiques insaturées en C₃-C₁₀ dans lesquelles le groupe amino est en position allyle, en particulier l'allylamine ou la diallylamine, ou
d'amines aromatiques qui portent des restes aliphatiques insaturés en conjugaison avec le système aromatique, en particulier le méthyl-, éthyl- ou propylaminoéthylstyrène ou l'aminostyrène,
avec
B) des composés réactifs qui contiennent au moins deux groupes réactifs à l'égard des amines primaires et secondaires, en une quantité de 5 à 95 mol % par rapport aux groupes amino primaires et secondaires de la polyamine et
C) des colorants qui contiennent au moins un groupe amino primaire ou secondaire acylable, en une quantité de 10 à 200 mol % par rapport au composé réactif,
où le colorant C) est lié dans chaque cas au composé réactif B).

11. Procédé pour colorer et imprimer des matériaux contenant de la cellulose/des groupes amides, en particulier du papier, du coton et du cuir, caractérisé en ce que l'on utilise au moins un colorant selon la revendication 1 ou la revendication 10.

12. Encres d'impression contenant au moins un colorant selon la revendication 1 ou la revendication 10.

13. Encres d'impression contenant
- 0,5 à 20 % en masse d'un ou plusieurs colorants selon la revendication 1 ou 10,
- 50 à 99,5 % en masse d'eau,
- 0 à 30 % en masse d'un ou plusieurs solvants organiques et
- 0 à 30 % en masse d'additifs influençant la viscosité et/ou la tension superficielle,
où la somme des constituants est égale à 100 %.

14. Utilisation des encres d'impression selon la revendication 12 ou 13 comme liquide d'enregistrement pour systèmes d'enregistrement par jet d'encre.

15. Substrats colorés ou imprimés avec au moins un colorant selon au moins l'une des revendications 1 à 10.
